# DEMANDE DE BREVET EUROPEEN

(11) **EP 4 451 574 A1**
(43) Date de publication de la demande: **23.10.2024**
(21) Numéro de dépôt: 24169098.1
(22) Date de dépôt: 09.04.2024
(51) Int. Cl.: H04B 5/00, H04B 5/79

(54) **DISPOSITIF DE COMMUNICATION ET DE CHARGEMENT SANS FIL**

(30) Priorité: 21.04.2023 FR 2304052
(71) Demandeur: STMicroelectronics International N.V., 1228 Plan-les-Ouates, Geneva (CH)
(72) Inventeur: DEMESSINE, Jean-Louis, 06640 SAINT-JEANNET (FR); CREUSY, Hugues, 13100 AIX EN PROVENCE (FR); LEMONNIER, Renaud, 06600 ANTIBES (FR)
(74) Mandataire: Cabinet Beaumont

(57) **Abrégé**

La présente description concerne un dispositif de communication sans fil (220) adapté à recevoir de l'énergie sans fil d'un autre dispositif de communication sans fil (110), le dispositif de communication sans fil comprenant :
- un bloc de charge (223) adapté à charger un dispositif de stockage d'énergie (224) ;
- un circuit de communication (222) adapté à communiquer une information de chargement du dispositif de stockage d'énergie à l'autre dispositif de communication sans fil, et comprenant :
un transpondeur (322) de communication sans fil ; et
un interrupteur (324) relié à une première borne (TD0) du transpondeur, et commandé par le bloc de charge.

## Description

### Domaine technique

La présente description concerne de façon générale les dispositifs de communication sans fil, par exemple utilisant une technologie du type radio-identification ("RFID", pour "Radio Frequency IDentification" en anglais), ou du type communication en champ proche ("NFC", pour Near-Field Communication en anglais), et en particulier les dispositifs de communication sans fil adaptés à un chargement sans fil utilisant une technologie de communication sans fil.

### Technique antérieure

La communication RFID est une technologie de communication sans fil qui permet de détecter et d'identifier un transpondeur, généralement attaché à un objet. Un système RFID comprend généralement un lecteur RFID ("reader" en anglais), et un transpondeur RFID (de l'anglais "transponder", contraction des mots "transmitter" et "responder"), par exemple une étiquette ("tag" en anglais). Typiquement, le lecteur RFID est configuré pour envoyer un signal d'interrogation, généralement un signal radiofréquence, au transpondeur RFID, qui peut alors répondre au lecteur RFID. Selon les dispositifs électroniques mis en oeuvre, la communication RFID peut être établie à basse fréquence, par exemple entre 125 et 134 kHz, à haute fréquence (HF), par exemple autour de 13,56 MHz, à ultra-haute fréquence (UHF), par exemple entre 860 et 960 MHz, voire à supra-haute fréquence, par exemple autour de 2,45 GHz. Une fréquence élevée favorise un échange d'informations (entre lecteur et transpondeur) à des débits plus importants qu'en basse fréquence, et à une distance plus grande.

La communication en champ proche (NFC) est une technologie de communication sans fil, qui peut être vue comme une extension du RFID, et qui permet une communication sur une courte distance, généralement jusqu'à 1 m, par exemple jusqu'à 10 cm, entre des dispositifs électroniques, par exemple entre un lecteur NFC, pouvant également être désigné "poller" en anglais, et un transpondeur NFC, pouvant également être désigné par le terme "écouteur", de l'anglais "listener", par exemple une étiquette.

La technologie NFC est une plate-forme technologique ouverte normalisée, par exemple dans les normes ISO/IEC 18092 et ISO/IEC 21481, et incorpore de nombreuses normes déjà existantes comme par exemple les protocoles type A et type B définis dans la norme ISO-14443 qui peuvent être des protocoles de communication utilisables dans la technologie NFC.

La technologie NFC peut aussi être utilisée dans un transpondeur RFID, par exemple un transpondeur RFID compatible avec la norme ISO/IEC 15693 et/ou la norme ISO/IEC 18000-3.

Ainsi, un transpondeur de communication sans fil, par exemple RFID ou NFC, est un dispositif électronique capable d'échanger des informations sans fil via une antenne avec un lecteur, par exemple RFID ou NFC, selon un protocole de communication sans fil, par exemple un protocole compatible avec la technologie NFC.

Lors d'une transmission d'information entre un lecteur et un transpondeur, une antenne du lecteur peut émettre un champ électromagnétique, ou signal radiofréquence (RF), par exemple à 13,56 MHz pour la technologie NFC, ou à d'autres fréquences pour la technologie RFID. Le signal radiofréquence généré, la porteuse, est généralement une onde sinusoïdale.

Pour une transmission d'informations depuis le lecteur vers le transpondeur, le lecteur peut mettre en oeuvre un circuit de modulation/démodulation afin de moduler la porteuse. Le transpondeur quant à lui comporte une antenne pour recevoir le signal radiofréquence et un circuit de démodulation/modulation configuré pour démoduler la porteuse reçue afin d'obtenir les données transmises par le lecteur. La porteuse peut également être utilisée pour fournir sans fil une quantité d'énergie électrique, généralement relativement limitée, par exemple une puissance allant jusqu'à 1 W, voire jusqu'à 3 W, au transpondeur, comme détaillé plus après.

Pour une transmission d'informations du transpondeur vers le lecteur, ce dernier peut générer le signal radiofréquence (la porteuse) sans modulation. L'antenne du transpondeur peut alors moduler, ou rétro-moduler, le signal radiofréquence généré par le lecteur, en fonction des informations à transmettre au lecteur. La fréquence de cette modulation correspond, par exemple, à une sous-porteuse de ladite porteuse. La fréquence de cette sous-porteuse dépend du protocole de communication utilisé et peut être, par exemple, égale à 848 kHz.

Plusieurs modes de fonctionnement sont alors possibles, notamment selon le type de transpondeur :un mode passif, un mode semi-actif, ou un mode actif.

Dans le mode passif, le transpondeur dit passif peut rétro-moduler le signal radiofréquence issu du lecteur pour transmettre des informations à ce dernier, mais n'intègre pas, pour la transmission des informations, de moyen d'émission capable par exemple de générer son propre champ électromagnétique. Généralement, un transpondeur passif est dépourvu d'alimentation car il peut utiliser le champ électromagnétique issu du lecteur pour alimenter ses composants électroniques. Toutefois, dans certaines applications, le transpondeur passif peut incorporer une alimentation, par exemple une pile.

Dans le mode semi-actif, le transpondeur utilise l'énergie du lecteur pour répondre à ce dernier. Ainsi, un transpondeur dit semi-actif agit comme un transpondeur passif au niveau communication sans fil. En revanche, des composants électroniques du transpondeur, par exemple un microcontrôleur, et/ou une mémoire, peuvent utiliser l'énergie d'une batterie.

Dans le mode actif, le lecteur et le transpondeur dit actif peuvent générer tous les deux un champ électromagnétique. Généralement, ce mode de fonctionnement est utilisé lorsque le transpondeur actif est pourvu d'une source d'alimentation propre, typiquement une batterie.

Par rapport à un mode passif, dans le mode semi-actif, et davantage dans le mode actif, on peut obtenir des distances de communication plus importantes, qui peuvent aller jusqu'à quelques dizaines de centimètres, par exemple en fonction du protocole de communication utilisé, de la taille de l'antenne du lecteur, et/ou la sensibilité du lecteur.

Dans le mode semi-actif ou actif, la batterie du transpondeur peut être chargée par transfert d'énergie sans fil, en convertissant le champ électromagnétique reçu du lecteur en courant de charge dans le transpondeur.

Le transfert d'énergie sans fil, ou chargement sans fil ("WPT" pour "Wireless Power Transfer" en anglais, ou "WPC" pour "Wireless Power Charging" en anglais), permet de transférer sans fil de l'énergie à partir d'un émetteur vers un récepteur, par exemple pour recharger une batterie du récepteur. Le chargement sans fil est généralement basé sur un couplage électromagnétique entre une antenne de l'émetteur adaptée à être couplée à une antenne du récepteur, le transfert d'énergie reposant sur un champ électromagnétique émis par l'antenne de l'émetteur et capturé par l'antenne du récepteur.

Le transfert d'énergie sans fil, ou chargement sans fil, peut être réalisé en utilisant une technologie de communication sans fil, par exemple du type RFID ou NFC. On peut parler de charge RFID ou de charge NFC. Dans ce cas, le champ électromagnétique à la fréquence donnée, par exemple à 13,56 MHz pour le NFC, est utilisé pour :
- les communications sans fil en mode lecteur ou en mode transpondeur ;
- le chargement sans fil en mode émetteur ou en mode récepteur, où c'est le lecteur RFID ou NFC qui fournit de l'énergie au transpondeur RFID ou NFC.

Par exemple, le NFC Forum définit, dans la section "chargement sans fil Forum NFC" (NFC Forum wireless charging) des critères de chargement sans fil, dit WLC, en utilisant la technologie NFC.

### Résumé de l'invention

Il existe un besoin d'une solution, de préférence simple et facile à mettre en oeuvre, pour contrôler un chargement d'énergie sans fil dans un dispositif de communication sans fil, comprenant un transpondeur de communication sans fil, par exemple un transpondeur RFID ou NFC.

Il existe également un besoin d'une solution, de préférence simple et facile à mettre en oeuvre, pour disposer d'une information concernant un niveau de charge dans un dispositif de communication sans fil comprenant un transpondeur, par exemple un transpondeur RFID ou NFC, par exemple pour transmettre le niveau de charge à un autre dispositif de communication sans fil comprenant un lecteur.

Un mode de réalisation pallie tout ou partie des inconvénients des dispositifs de communication et de chargement sans fil connus.

Un mode de réalisation prévoit un dispositif de communication sans fil adapté à recevoir de l'énergie sans fil d'un autre dispositif de communication sans fil, le dispositif de communication sans fil comprenant :
- un bloc de charge adapté à charger un dispositif de stockage d'énergie ;
- un circuit de communication adapté à communiquer une information de chargement du dispositif de stockage d'énergie à l'autre dispositif de communication sans fil, et comprenant :
   un transpondeur de communication sans fil ; et
   un interrupteur relié à une première borne du transpondeur, et commandé par le bloc de charge.

Selon un mode de réalisation, l'interrupteur est adapté à ouvrir ou fermer un circuit entre la première borne et une deuxième borne du transpondeur, ou entre la première borne et un noeud d'application d'une tension, ledit noeud étant inclus dans le circuit de communication, en fonction d'une commande du bloc de charge, correspondant à l'information de chargement à communiquer, et le transpondeur est adapté à détecter si le circuit est ouvert ou fermé afin de communiquer l'information de chargement correspondante à l'autre dispositif de communication sans fil.

Selon un mode de réalisation, l'interrupteur est adapté à relier ou non la première borne et un noeud d'application d'une tension, ledit noeud étant inclus dans le circuit de communication, en fonction d'une commande du bloc de charge, correspondant à l'information de chargement à communiquer.

Selon un mode de réalisation, le circuit de communication, par exemple le transpondeur, est adapté à détecter si la première borne et le noeud sont reliés ou en circuit ouvert, et à transmettre l'information de chargement correspondante à l'autre dispositif de communication sans fil.

Selon un mode de réalisation, l'interrupteur est adapté à relier la première borne et le noeud lorsque le bloc de charge commande la fermeture dudit interrupteur et/ou à ouvrir le circuit entre la première borne et le noeud lorsque le bloc de charge commande l'ouverture dudit interrupteur.

Selon un mode de réalisation, le bloc de charge est adapté à relier, via l'interrupteur, la première borne et le noeud lorsque le dispositif de stockage d'énergie passe d'un premier état de charge à un deuxième état de charge, et/ou à ouvrir, via l'interrupteur, le circuit entre la première borne et le noeud lorsque le dispositif de stockage d'énergie passe du deuxième état de charge au premier état de charge.

Selon un mode de réalisation, la commande du bloc de charge est un signal de commande ayant :
- un premier état indiquant un premier état de charge du dispositif de stockage d'énergie, le premier état étant destiné à déclencher, ou maintenir, l'ouverture du circuit entre la première borne et le noeud ; et
- un deuxième état indiquant un deuxième état de charge du dispositif de stockage d'énergie, le deuxième état étant destiné à déclencher, ou maintenir, la fermeture du circuit entre la première borne et le noeud.

Selon un mode de réalisation, le premier état de charge est un état de charge non terminée, et le deuxième état de charge est un état de charge terminée.

Selon un mode de réalisation, le transpondeur comprend une unité de traitement configurée pour détecter si la première borne et le noeud sont reliés ou en circuit ouvert.

Selon un mode de réalisation, l'unité de traitement comprend un circuit adapté à mesurer une tension présente à la première borne.

Selon un mode de réalisation, l'unité de traitement comprend un moyen de comparaison configuré pour comparer la tension mesurée à la première borne avec la tension présente au noeud de manière à détecter si la première borne et le noeud sont reliés ou en circuit ouvert.

Selon un mode de réalisation, l'interrupteur est adapté à relier ou non la première borne et une deuxième borne du transpondeur en fonction d'une commande du bloc de charge, correspondant à l'information de chargement à communiquer.

Selon un mode de réalisation, le circuit de communication, par exemple le transpondeur, est adapté à détecter si les première et deuxième bornes sont reliées ou en circuit ouvert, et à transmettre l'information de chargement correspondante à l'autre dispositif de communication sans fil.

Selon un mode de réalisation, l'interrupteur est adapté à relier les première et deuxième bornes lorsque le bloc de charge commande la fermeture dudit interrupteur et/ou à ouvrir le circuit entre les première et deuxième bornes lorsque le bloc de charge commande l'ouverture dudit interrupteur.

Selon un mode de réalisation, le bloc de charge est adapté à relier, via l'interrupteur, les première et deuxième bornes lorsque le dispositif de stockage d'énergie passe d'un premier état de charge à un deuxième état de charge, et/ou à ouvrir, via l'interrupteur, le circuit entre les première et deuxième bornes lorsque le dispositif de stockage d'énergie passe du deuxième état de charge au premier état de charge.

Selon un mode de réalisation, la commande du bloc de charge est un signal de commande ayant :
- un premier état indiquant un premier état de charge du dispositif de stockage d'énergie, le premier état étant destiné à déclencher, ou maintenir, l'ouverture du circuit entre les première et deuxième bornes ; et
- un deuxième état indiquant un deuxième état de charge du dispositif de stockage d'énergie, le deuxième état étant destiné à déclencher, ou maintenir, la fermeture du circuit entre les première et deuxième bornes.

Selon un mode de réalisation, le premier état de charge est un état de charge non terminée, et le deuxième état de charge est un état de charge terminée.

Selon un mode de réalisation, le transpondeur comprend une unité de traitement configurée pour détecter si les première et deuxième bornes sont reliées ou en circuit ouvert.

Selon un mode de réalisation, l'unité de traitement comprend un circuit adapté à mesurer une tension présente à la première borne et à délivrer une tension de référence dans la deuxième borne.

Selon un mode de réalisation, l'unité de traitement comprend un moyen de comparaison configuré pour comparer la tension mesurée à la première borne avec la tension de référence, de manière à détecter si les première et deuxième bornes sont reliées ou en circuit ouvert.

Selon un mode de réalisation, l'information de chargement prend la forme d'une valeur binaire.

Selon un mode de réalisation, le transpondeur comprend une unité de stockage adaptée à stocker l'information de chargement.

Selon un mode de réalisation :
- la première borne est une borne d'entrée du transpondeur ; et/ou
- le dispositif de stockage d'énergie est une batterie ; et/ou
- le dispositif de stockage d'énergie est utilisé pour le dispositif de communication sans fil, et/ou pour charger un objet relié audit dispositif de communication sans fil, par exemple un objet connecté ; et/ou
- le transpondeur est sous la forme d'un circuit intégré.

Selon un mode de réalisation, le dispositif de communication sans fil comprend en outre une antenne de communication sans fil reliée au transpondeur et adaptée à transmettre l'information de chargement par couplage électromagnétique avec une autre antenne de communication sans fil de l'autre dispositif de communication sans fil, le bloc de charge étant également relié à l'antenne de communication sans fil.

Selon un mode de réalisation, le transpondeur est un transpondeur NFC ou un transpondeur RFID, par exemple un transpondeur RFID utilisant une technologie NFC.

Un mode de réalisation prévoit un procédé de communication d'une information de chargement d'un dispositif de stockage d'énergie compris dans un dispositif de communication sans fil adapté à recevoir de l'énergie sans fil d'un autre dispositif de communication sans fil, le dispositif de communication sans fil comprenant :
- un bloc de charge adapté à charger le dispositif de stockage d'énergie ; et
- un circuit de communication comprenant :
   un transpondeur de communication sans fil ; et
   un interrupteur relié à une première borne du transpondeur, et commandé par le bloc de charge ;

l'interrupteur étant adapté à relier ou non la première borne à une deuxième borne du transpondeur, ou à un noeud d'application d'une tension, ledit noeud étant inclus dans le circuit de communication, en fonction d'une commande du bloc de charge, correspondant à l'information de chargement à communiquer ;
le procédé comprenant :
   - la détection, par le circuit de communication, d'une liaison ou d'un circuit ouvert entre les première et deuxième bornes, ou entre la première borne et le noeud ; et
   - la transmission, par le circuit de communication, de l'information de chargement correspondante à l'autre dispositif de communication sans fil.

Selon un mode de réalisation, la détection et/ou la transmission est réalisée par le transpondeur.

Selon un mode de réalisation, le procédé comprend en outre, avant la détection :
- l'envoi d'une commande du bloc de charge à l'interrupteur, correspondant à l'information de chargement, de manière à relier, ou ouvrir le circuit entre, les première et deuxième bornes ou la première borne et le noeud.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique et sous forme de blocs, un exemple de système de communication sans fil également adapté au chargement sans fil ;
la figure 2 représente, de façon schématique et sous forme de blocs, un exemple de système de communication sans fil comprenant un dispositif de communication sans fil selon un mode de réalisation ;
la figure 3A représente, de façon schématique et sous forme de blocs, un exemple de réalisation du dispositif de communication sans fil de la figure 2, incluant un transpondeur de communication sans fil ;
la figure 3B représente, de façon schématique et sous forme de blocs, un autre exemple de réalisation du dispositif de communication sans fil de la figure 2, incluant un autre transpondeur de communication sans fil ;
la figure 4 représente, de façon schématique et sous forme de blocs, un exemple de réalisation du transpondeur de la figure 3A ; et
la figure 5A et la figure 5B représentent, de façon schématique et sous forme de blocs, un exemple de réalisation du système de communication sans fil de la figure 2, dans deux états de charge différents.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les protocoles de communication RFID ou NFC et les dispositifs ou circuits électroniques habituels mettant en oeuvre ces protocoles n'ont pas été détaillés, ces protocoles étant bien connus de la personne du métier et étant compatibles avec les modes de réalisation décrits.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Dans la description qui suit, lorsque l'on fait référence à un signal radiofréquence, il est fait référence à un signal adapté à la communication sans fil, typiquement un signal dont la fréquence est comprise entre 3 kHz et 300 GHz, ces fréquences étant couramment utilisées pour la communication sans fil.

Dans la description qui suit, lorsque l'on fait référence à un chargeur de batterie, il est fait référence à un dispositif adapté à charger tout dispositif de stockage d'énergie, ce qui comprend, mais ne se limite pas à, une batterie. Un chargeur de batterie peut également être désigné par "bloc de charge", et comprendre un circuit de charge.

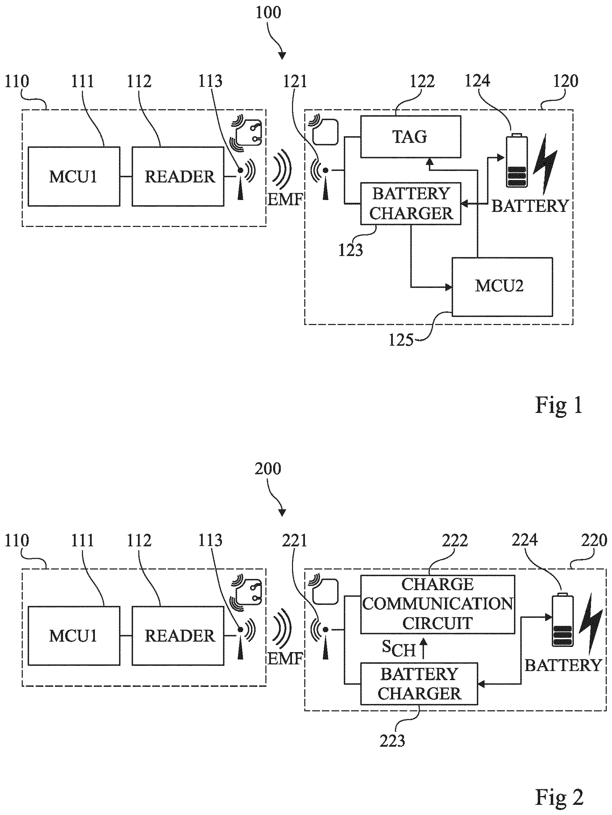

La figure 1 représente, de façon schématique et sous forme de blocs, un exemple de système 100 de communication sans fil, également adapté au chargement sans fil.

Le système 100 comprend un premier dispositif de communication sans fil 110 et un deuxième dispositif de communication sans fil 120.

Le premier dispositif de communication sans fil 110, qui est par exemple configuré pour mettre en oeuvre un lecteur NFC, comprend :
- un contrôleur 111 (MCU1), qui peut être sous forme d'un microcontrôleur ;
- un lecteur NFC 112 (READER), relié, par exemple connecté, au contrôleur 111, et qui peut être sous forme d'un circuit intégré ; et
- une première antenne NFC 113, reliée, par exemple connectée, au lecteur NFC 112.

La première antenne NFC 113 peut comprendre une ou plusieurs bobines ou éléments inductifs, par exemple sous la forme d'une antenne patch ou d'une antenne micro-ruban. La au moins une bobine ou le au moins un élément inductif est, par exemple, connecté(e) à, ou compris(e) dans, un circuit oscillant (non représenté dans la figure 1).

Le lecteur NFC 112 est, par exemple, configuré pour gérer des communications en champ proche par l'intermédiaire de la première antenne NFC 113. Par exemple, le lecteur NFC 112 comprend :
- un circuit d'alimentation de la première antenne NFC 113 en courant alternatif pour qu'un champ électromagnétique EMF puisse être émis par ladite première antenne ;
- un circuit de modulation et/ou de démodulation configuré pour moduler et/ou démoduler un signal radiofréquence afin de recevoir des données du, et/ou envoyer des données au, deuxième dispositif de communication sans fil 120, en utilisant un protocole NFC.

Le lecteur NFC 112 peut être connecté ou relié à, ou peut comprendre, un circuit d'adaptation d'impédance (non représenté dans la figure 1), qui à son tour est connecté ou relié à la première antenne 113. Le lecteur NFC 112 peut également comprendre d'autres composants électroniques (non représentés dans la figure 1), bien connus de la personne du métier.

Le contrôleur 111 est, par exemple, configuré pour mettre en oeuvre un protocole de communication sans fil et pour transmettre un signal d'instruction au lecteur NFC 112. En retour, le lecteur NFC 112 peut envoyer des informations au contrôleur 111.

Le deuxième dispositif de communication sans fil 120, qui est par exemple configuré pour mettre en oeuvre ou émuler une carte ou un transpondeur NFC, comprend :
- une deuxième antenne NFC 121, adaptée à être couplée électromagnétiquement à la première antenne NFC 113 ;
- un transpondeur NFC 122 (TAG), relié, par exemple connecté, à la deuxième antenne NFC 121, et qui peut être sous forme d'un circuit intégré ;
- un chargeur de batterie 123 (BATTERY CHARGER) relié, par exemple connecté, à la deuxième antenne NFC 121 ;
- un dispositif de stockage d'énergie 124 (BATTERY) relié, par exemple connecté, au chargeur de batterie 123, le dispositif de stockage d'énergie étant par exemple une batterie.

La deuxième antenne NFC 121 peut comprendre une ou plusieurs bobines ou éléments inductifs, par exemple sous la forme d'une antenne patch ou d'une antenne micro-ruban. La au moins une bobine ou le au moins un élément inductif est, par exemple, connecté(e) à, ou compris(e) dans, un circuit oscillant (non représenté dans la figure 1).

Le transpondeur NFC 122 est par exemple configuré pour gérer des communications en champ proche. Par exemple, le transpondeur NFC 122 comprend un circuit de démodulation et/ou de modulation configuré pour démoduler et/ou moduler un signal radiofréquence afin de recevoir des données de, et/ou envoyer des données au, premier dispositif de communication sans fil 110, en utilisant un protocole de communication NFC.

Dans l'exemple de la figure 1, la deuxième antenne NFC 121 est également configurée pour gérer une charge NFC. En d'autres termes, le chargeur de batterie 123 est configuré pour recevoir un courant alternatif induit par la première antenne NFC 113 dans la deuxième antenne NFC 121. Le chargeur de batterie 123 peut alors fournir un courant de charge au dispositif de stockage d'énergie 124, par exemple à une batterie. En retour, le dispositif de stockage d'énergie 124 peut envoyer un signal au chargeur de batterie 123, par exemple pour l'informer de l'état du chargement, tel qu'un niveau de charge. Le chargeur de batterie 123 peut comprendre plusieurs composants électroniques (non représentés dans la figure 1) pour recevoir le courant alternatif, et, par exemple, le convertir en un courant continu.

Le transpondeur NFC 122 et/ou le chargeur de batterie 123 peuvent être connectés ou reliés à, ou peuvent comprendre, un circuit d'adaptation d'impédance (non représenté dans la figure 1), qui à son tour est connecté ou relié à la deuxième antenne NFC 121.

Bien que non représentés sur la figure 1, le premier dispositif de communication sans fil 110 et le deuxième dispositif de communication sans fil 120 comprennent généralement d'autres circuits et/ou composants électroniques, bien connus d'une personne du métier.

Dans cet exemple, le deuxième dispositif de communication sans fil 120 comporte un microcontrôleur 125 (MCU2) dont une fonction, entre autres fonctions possibles, est de récupérer une information sur l'état de charge du dispositif de stockage d'énergie 124 via le chargeur de batterie 123, et, par exemple, de transmettre cette information de chargement au transpondeur NFC 122. Le microcontrôleur 125 est ainsi configuré pour communiquer avec le chargeur de batterie 123 et avec le transpondeur NFC 122. L'information de chargement peut être envoyée au premier dispositif de communication sans fil 110 par l'intermédiaire du transpondeur NFC 122 et de la deuxième antenne NFC 121.

Un inconvénient à utiliser un microcontrôleur pour gérer un échange d'information de chargement entre le deuxième dispositif de communication sans fil et le premier dispositif de communication sans fil est que cela peut nécessiter d'ajouter un composant électronique, qui est consommateur de matériau, de surface, et de puissance électrique, ce qui peut augmenter le coût de fabrication et d'utilisation du système.

Si, à l'inverse, on n'implante pas de microcontrôleur, le premier dispositif de communication sans fil pourrait ne pas disposer d'information quant au niveau de charge dans le deuxième dispositif de communication sans fil, et donc, continuer à transmettre de l'énergie alors que cela n'est peut-être plus nécessaire.

Les inventeurs proposent un dispositif de communication sans fil qui soit adapté au chargement sans fil et qui permette de pallier tout ou partie des inconvénients décrits précédemment, en particulier de répondre au problème d'information de chargement, tout en limitant les composants électroniques, et leur consommation électrique.

Des modes de réalisation de dispositif de communication sans fil vont être décrits ci-après. Les modes de réalisation décrits sont non limitatifs et diverses variantes apparaîtront à la personne du métier à partir des indications de la présente description.

On notera que, si les modes de réalisation sont plus particulièrement décrits en relation avec un protocole de communication NFC, ils s'appliquent plus généralement à tout protocole de communication sans fil, par exemple du type RFID.

La figure 2 représente, de façon schématique et sous forme de blocs, un exemple de système de communication sans fil 200 comprenant un dispositif de communication sans fil 220 selon un mode de réalisation.

Le système 200 comprend un premier dispositif de communication sans fil (autre dispositif de communication sans fil), par exemple similaire au premier dispositif de communication sans fil 110 de la figure 1, et un deuxième dispositif de communication sans fil 220 (dispositif de communication sans fil).

Le deuxième dispositif de communication sans fil 220 comprend :
- une deuxième antenne NFC 221 (antenne NFC), adaptée à être couplée électromagnétiquement à la première antenne NFC 113 du premier dispositif de communication sans fil 110 ;
- un circuit de communication 222 (CHARGE COMMUNICATION CIRCUIT) d'une information de chargement, relié, par exemple connecté, à la deuxième antenne NFC 221, et comprenant un transpondeur NFC (non représenté dans la figure 2) ;
- un chargeur de batterie 223 (BATTERY CHARGER), ou bloc de charge, relié, par exemple connecté, à la deuxième antenne NFC 221 et au circuit de communication 222 ;
- un dispositif de stockage d'énergie 224 (BATTERY) relié, par exemple connecté, au chargeur de batterie 223, le dispositif de stockage d'énergie étant par exemple une batterie.

Dans la suite de la description, le circuit de communication d'une information de chargement est également désigné par circuit de communication.

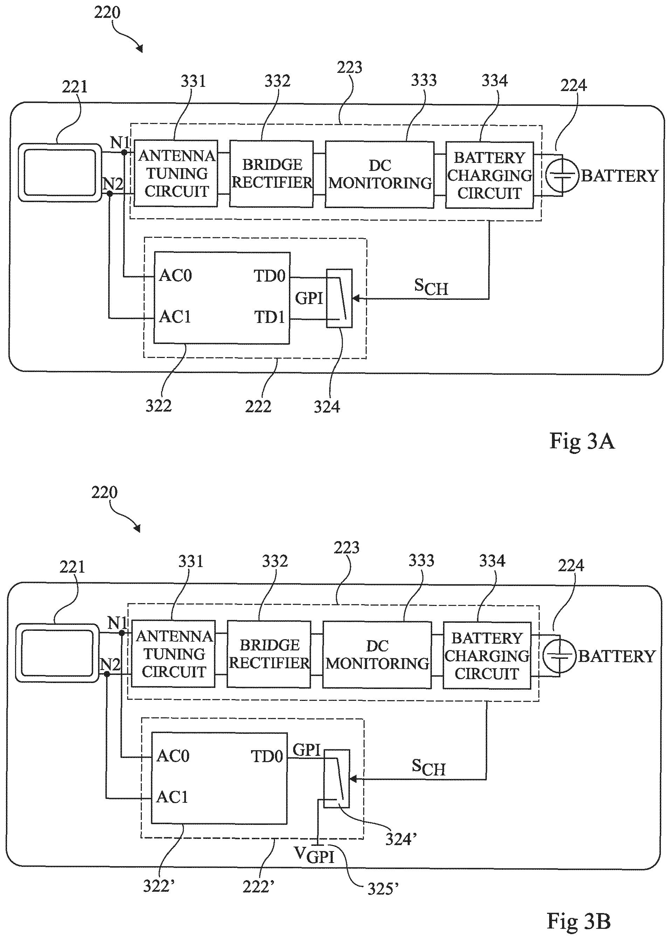

Similairement au deuxième dispositif de communication sans fil 120 de la figure 1, le deuxième dispositif de communication sans fil 220 de la figure 2, en particulier la deuxième antenne NFC 221, est également configuré pour gérer une charge NFC. En d'autres termes, le chargeur de batterie 223 est configuré pour recevoir un courant alternatif induit par la première antenne NFC 113 (autre antenne NFC) du premier dispositif de communication sans fil 110 dans la deuxième antenne NFC 221. Le chargeur de batterie 223 peut alors fournir un courant de charge au dispositif de stockage d'énergie 224. En retour, le dispositif de stockage d'énergie 224 peut envoyer un signal au chargeur de batterie 223, par exemple pour l'informer du niveau du chargement. Le chargeur de batterie 223 peut comprendre plusieurs composants électroniques (non représentés dans la figure 2, mais donnés en exemple dans les figures 3A et 3B) pour recevoir le courant alternatif, et, par exemple, le convertir en un courant continu.

Le deuxième dispositif de communication sans fil 220 de la figure 2 ne comporte pas nécessairement de microcontrôleur similaire au microcontrôleur 125 de la figure 1, et le transpondeur NFC compris dans le circuit de communication 220 comprend une borne adaptée à être reliée au chargeur de batterie 223 par l'intermédiaire d'un interrupteur compris dans le circuit de communication 222, comme expliqué plus après.

Le chargeur de batterie 223 peut envoyer au circuit de communication 222 un signal de commande S_{CH}, et le circuit de communication 222 est configuré pour, en fonction de l'état du signal de commande envoyé, communiquer une information de chargement au premier dispositif de communication sans fil 110 par l'intermédiaire du transpondeur NFC du circuit de communication 222, de la deuxième antenne NFC 221 et de la première antenne NFC 121 du premier dispositif de communication sans fil 110, et ce, sans qu'il soit nécessaire de disposer d'un microcontrôleur.

La figure 3A représente, de façon schématique et sous forme de blocs, un exemple de réalisation du dispositif de communication sans fil 220 de la figure 2, incluant un transpondeur de communication sans fil.

La figure 3A représente les éléments suivants du dispositif de communication sans fil 220 déjà décrits en relation avec la figure 2 :
- l'antenne NFC 221 ;
- le circuit de communication 222 relié, par exemple connecté, à l'antenne NFC 221;
- le chargeur de batterie 223 relié, par exemple connecté, à l'antenne NFC 221 ;
- le dispositif de stockage d'énergie 224 (BATTERY) relié, par exemple connecté, au chargeur de batterie 223.

Le circuit de communication 222 comprend un transpondeur NFC 322, par exemple sous la forme d'un circuit intégré.

Similairement au transpondeur NFC 122 de la figure 1, le transpondeur NFC 322 de la figure 3A peut être configuré pour gérer des communications en champ proche. Par exemple, le transpondeur NFC 322 comprend un circuit de démodulation et/ou de modulation configuré pour démoduler et/ou moduler un signal radiofréquence afin de recevoir des données de, et/ou envoyer des données au, premier dispositif de communication sans fil 110, en utilisant un protocole de communication NFC.

Le transpondeur NFC 322 est, par exemple, configuré pour traiter les informations reçues du premier dispositif de communication sans fil 110 et pour rétro-moduler un signal de porteuse envoyé par le premier dispositif de communication sans fil 110 en vue de la transmission d'une information, par exemple une information de chargement, vers ledit premier dispositif de communication sans fil.

Le circuit de communication 222 comprend en outre un interrupteur 324, ou switch en anglais, relié à au moins une parmi deux bornes TD0, TD1 du transpondeur NFC 322, et adapté à relier, ou ouvrir le circuit entre, les deux bornes TD0 et TD1. Alternativement à un interrupteur, il peut s'agir de tout autre dispositif adapté à relier, ou ouvrir le circuit entre, les deux bornes TD0 et TD1.

Les deux bornes TD0, TD1 du transpondeur NFC 322 comprennent une borne d'entrée (TD0), de préférence une borne numérique, depuis l'interrupteur 324, formant par exemple une entrée numérique (GPI), et une borne de sortie (TD1) vers l'interrupteur 324.

Le transpondeur NFC 322 comporte deux autres bornes AC0, AC1, par exemple des bornes analogiques, respectivement reliées à deux noeuds N1, N2 en sortie de l'antenne NFC 221.

Par exemple, le chargeur de batterie 223, ou bloc de charge, comprend :
- un circuit d'adaptation d'impédance 331 (ANTENNA TUNING CIRCUIT) relié, par exemple connecté, aux deux noeuds N1, N2 en sortie de l'antenne NFC 221 ;
- un redresseur 332 (BRIDGE RECTIFIER) relié, par exemple connecté, au circuit d'adaptation d'impédance 331 ;
- un circuit de surveillance de courant continu 333 (DC MONITORING) relié, par exemple connecté, au redresseur 332, et adapté à détecter la présence d'une tension continue, et/ou d'un courant continu, en sortie de redresseur 332 et, en réponse, à alimenter un circuit de charge ; et
- un circuit de charge 334 (BATTERY CHARGING CIRCUIT) relié, par exemple connecté, au circuit de surveillance de courant continu 333, et adapté à transmettre la tension continue détectée et/ou le courant continu détecté au dispositif de stockage d'énergie 224.

Les deux bornes TD0, TD1 du transpondeur NFC 322 sont adaptées à être reliées au chargeur de batterie 223, dans l'exemple au circuit de charge 334, par l'intermédiaire de l'interrupteur 324, lorsque ce dernier est fermé. Lorsque l'interrupteur est ouvert, une seule borne TD0 parmi les deux bornes TD0, TD1 du transpondeur NFC 322 est reliée au chargeur de batterie 223.

En envoyant un signal de commande S_{CH} à l'interrupteur 324, indiquant une information de chargement, par exemple un état de charge, du dispositif de stockage d'énergie 224, le chargeur de batterie 223, par exemple le circuit de charge 334, peut déclencher une liaison (fermeture du circuit) entre les deux bornes TD0 et TD1, ou une ouverture du circuit entre les deux bornes TD0 et TD1. Le transpondeur NFC 322 est adapté à détecter l'état de l'interrupteur 324, en fonction de l'état du circuit (ouvert ou fermé) entre les deux bornes TD0, TD1. Le transpondeur NFC 322 peut ainsi déterminer le signal de commande S_{CH} envoyé par le chargeur de batterie 223, et ainsi remonter à l'information de chargement.

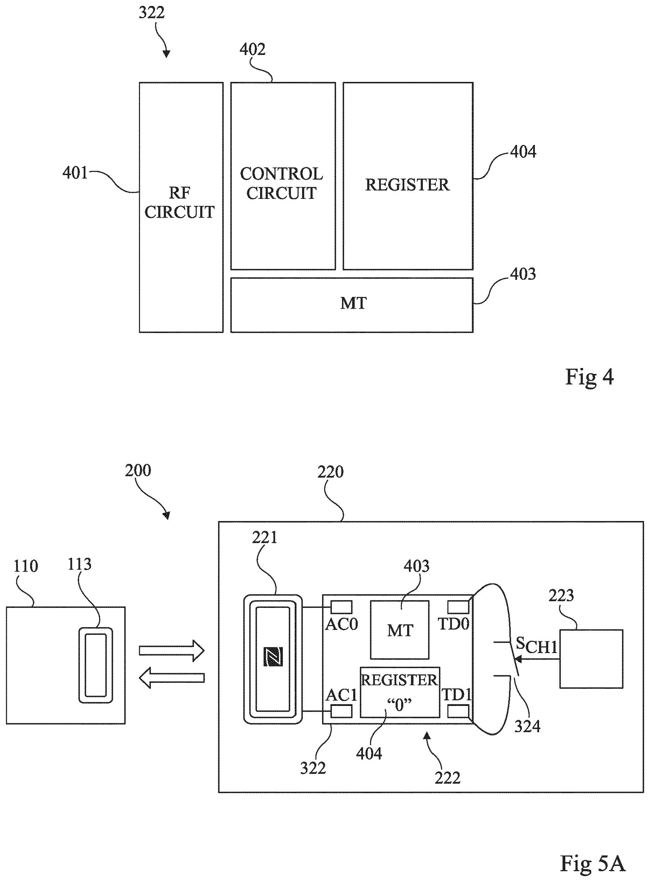

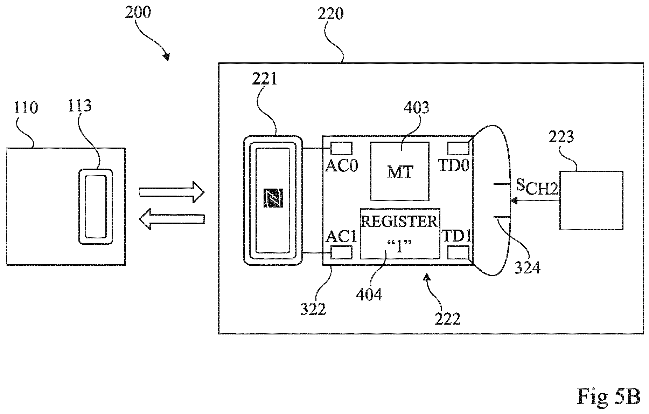

Ainsi, comme cela est expliqué plus après en relation avec les figures 5A et 5B, le chargeur de batterie 223, par exemple le circuit de charge 334, peut, en fonction de l'état de charge du dispositif de stockage d'énergie 224, envoyer un signal de commande S_{CH} destiné à ouvrir ou à fermer l'interrupteur 324, et le transpondeur NFC 322 peut détecter l'état de l'interrupteur 324.

Selon un exemple, les deux bornes TD0, TD1 sont des bornes numériques d'un transpondeur NFC utilisées pour une détection d'évènement, et ces bornes sont également utilisées pour détecter l'état de l'interrupteur. Par exemple, la fonction de détection d'évènement est une détection d'intégrité, ou "tamper detect" en anglais.

La figure 3B représente, de façon schématique et sous forme de blocs, un autre exemple de réalisation du dispositif de communication sans fil de la figure 2, incluant un autre transpondeur de communication sans fil. Le dispositif de communication sans fil de la figure 3B se distingue de celui de la figure 3A en ce que le transpondeur NFC 322' ne comprend plus deux bornes TD0, TD1 mais une seule borne TD0 (première borne), formant par exemple une entrée numérique (GPI), et que le circuit de communication 222' comprend un noeud 325' d'application d'une tension V_{GPI}, qui peut être soit la masse, soit une tension positive. L'interrupteur 324' du circuit de communication 222' est adapté à relier la borne TD0 du transpondeur NFC 322' au noeud 325' d'application de la tension V_{GPI}, ou ouvrir le circuit entre la borne TD0 et le noeud 325'. Alternativement à un interrupteur, il peut s'agir de tout autre dispositif adapté à relier, ou ouvrir, le circuit entre la borne TD0 et le noeud 325'.

Dans le cas où la tension V_{GPI} est une tension positive, par exemple à V_{DD}, le transpondeur NFC 322' comprend par exemple une résistance reliant la borne TD0 à la masse.

Dans le cas où la tension V_{GPI} est la masse, le transpondeur NFC 322' comprend par exemple une résistance reliant la borne TD0 à une tension positive, par exemple à V_{DD}.

La figure 4 représente, de façon schématique et sous forme de blocs, un exemple de réalisation du transpondeur NFC 322 de la figure 3A.

Outre des composants électroniques classiques d'un transpondeur NFC, tel qu'un circuit RF de modulation/démodulation 401 (RF CIRCUIT), et un circuit de contrôle 402 (CONTROL CIRCUIT) configuré pour mettre en oeuvre un protocole de communication sans fil NFC et transmettre un signal d'instruction au circuit RF 401, le transpondeur NFC 322 comprend une unité de traitement 403 (MT) adaptée à détecter si les deux bornes TD0, TD1 sont reliées ou non, correspondant à une information de chargement, comme expliqué plus après.

L'unité de traitement 403 peut comprendre un circuit adapté à délivrer une tension de référence dans une des deux bornes TD0, TD1, par exemple la deuxième borne TD1, et à mesurer une tension dans une autre des deux bornes TD0, TD1, par exemple la première borne TD0.

L'unité de traitement 403 peut également comprendre, par exemple, un moyen de comparaison configuré pour comparer la tension mesurée à la première borne TD0 avec la tension de référence présente à la deuxième borne TD1 afin de détecter si les deux bornes TD0, TD1 sont reliées ou non par l'interrupteur 324.

Par exemple, si les deux bornes TD0, TD1 ne sont pas reliées, la tension sur la première borne TD0 est proche de, ou égale à, la tension de la masse, par exemple environ zéro, conduisant à la délivrance d'une première valeur binaire, par exemple un "0", par exemple en sortie du comparateur. Si par contre, les deux bornes TD0, TD1 sont reliées, la tension présente sur la première borne TD0 dépend de la tension de référence, et généralement de la résistance de l'interrupteur et d'une résistance de tirage vers le bas (en anglais "Pull down") reliée entre la première borne TD0 et la masse. Les résistances de l'interrupteur et de tirage vers le bas étant généralement fixées, la tension de référence peut être choisie pour que la tension détectée sur la première borne TD0 soit dans une plage de valeurs conduisant à la délivrance d'une deuxième valeur binaire, par exemple un "1", par exemple en sortie du comparateur.

En variante, il est possible de détecter si les deux bornes TD0, TD1 sont reliées, ou non, en injectant un courant dans l'une des bornes et en détectant la présence ou l'absence de ce courant dans l'autre borne.

Le transpondeur NFC 322 peut en outre comprendre une unité de stockage 404 (REGISTER) adaptée à stocker des informations, par exemple une information de chargement. L'unité de stockage 404 peut être un registre, ou une mémoire, par exemple une mémoire du type mémoire en lecture seule programmable électriquement effaçable, ou EEPROM de l'anglais "Electrically Erasable Programmable Read-Only Memory".

Le transpondeur NFC 322 est également adapté à transmettre l'information de chargement au premier dispositif de communication sans fil 110, par l'intermédiaire de l'antenne NFC 221 du dispositif de communication sans fil 220 et de l'antenne NFC 113 du premier dispositif de communication sans fil 110, comme expliqué ci-après en relation avec les figures 5A et 5B.

L'exemple de réalisation de la figure 4 a été décrit en relation avec le transpondeur NFC 322 de la figure 3A, mais peut également s'appliquer au transpondeur NFC 322' de la figure 3B. Dans ce cas, l'unité de traitement 403 est adaptée à détecter si la borne TD0 et le noeud 325' sont reliés ou non, correspondant à une information de chargement. L'unité de traitement 403 peut comprendre un circuit adapté à mesurer une tension dans la borne TD0, et un moyen de comparaison configuré pour comparer la tension mesurée à la borne TD0 avec la tension V_{GPI} présente au noeud 325' (remplaçant la tension de référence à la deuxième borne TD1), afin de détecter si la borne TD0 et le noeud 325' sont reliés ou non par l'interrupteur 324'.

La figure 5A et la figure 5B représentent, de façon schématique et sous forme de blocs, un exemple de réalisation du système de communication sans fil 200 de la figure 2, dans deux états de chargement différents.

Le chargeur de batterie 223 du dispositif de communication sans fil 220, par exemple le circuit de charge 334 de la figure 3A, peut envoyer un signal de commande ayant un premier état S_{CH1} au circuit de communication 222 destiné à positionner, ou à maintenir, l'interrupteur 324 dans un état ouvert, correspondant à ouvrir, ou à maintenir ouvert, le circuit entre les deux bornes TD0 et TD1, comme représenté dans la figure 5A.

Le chargeur de batterie 223 du dispositif de communication sans fil 220, par exemple le circuit de charge 334 de la figure 3A, peut envoyer un signal de commande ayant un deuxième état S_{CH2} au circuit de communication 222 destiné à positionner, ou à maintenir, l'interrupteur 324 dans un état fermé, revenant à relier, ou à maintenir la liaison entre, les deux bornes TD0 et TD1, comme représenté dans la figure 5B.

Par exemple, le premier état S_{CH1} du signal de commande correspond à un premier état de charge du dispositif de stockage d'énergie, par exemple un état de charge non terminée, et le deuxième état S_{CH2} du signal de commande correspond à un deuxième état de charge du dispositif de stockage d'énergie, par exemple un état de charge terminée.

Par exemple, si les deux bornes TD0 et TD1 ne sont pas reliées, alors l'unité de traitement 403 du transpondeur NFC 322 peut attribuer une première valeur binaire, par exemple la valeur "0", à l'information de chargement qui est représentative d'un premier état de charge du dispositif de stockage d'énergie, par exemple un chargement non terminé. L'unité de stockage 404 du transpondeur NFC 322 peut alors stocker cette première valeur binaire "0". Si par contre, les deux bornes TD0 et TDI sont reliées, l'unité de traitement 403 peut attribuer une deuxième valeur binaire, par exemple la valeur "1", à l'information de chargement qui est représentative d'un deuxième état de charge du dispositif de stockage d'énergie, par exemple un chargement terminé. L'unité de stockage 404 peut alors stocker cette deuxième valeur binaire "1".

Ensuite, l'information de chargement peut être délivrée par le transpondeur NFC 322 du circuit de communication 222 au premier dispositif de communication sans fil 110 au cours d'une communication sans fil. Par exemple, le premier dispositif de communication sans fil 110 interroge le transpondeur NFC 322 et celui-ci, par exemple par rétro-modulation, délivre la valeur de l'information de chargement au premier dispositif de communication sans fil 110.

L'exemple de réalisation des figures 5A et 5B a été décrit en relation avec le dispositif de communication sans fil de la figure 3A, mais peut également s'appliquer au dispositif de communication sans fil de la figure 3B. Dans ce cas, le signal de commande envoyé par le chargeur de batterie 223, par exemple le circuit de charge 334, est destiné à positionner, ou à maintenir, l'interrupteur 324 dans un état ouvert, respectivement dans un état fermé, correspondant à ouvrir ou à maintenir ouvert, respectivement à fermer ou à maintenir fermé, le circuit entre la borne TD0 et le noeud 325' d'application de la tension V_{GPI}, et l'unité de traitement 403 est adaptée à détecter si la borne TD0 et le noeud 325' sont reliés ou non.

Ainsi, les modes de réalisation permettent de gérer le chargement sans fil d'un dispositif de communication sans fil, par exemple de transmettre une information de chargement dans le dispositif de communication sans fil à un autre (premier) dispositif de communication sans fil qui lui transfère la charge, par exemple par communication du type NFC ou RFID, sans qu'il soit nécessaire de disposer d'un microcontrôleur.

Dans les modes de réalisation décrits, le dispositif de stockage d'énergie 224, par exemple la batterie, peut être utilisé pour les besoins propres du dispositif de communication sans fil 220, par exemple du transpondeur NFC 322, et/ou pour charger un objet relié au, intégré dans, ou intégrant, le dispositif de communication sans fil 220. L'objet peut être une paire d'écouteurs, une montre connectée, un tracker de fitness, ou tout objet du type objet connecté ou du type Internet des Objets (en anglais IoT pour Internet of Things).

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le transpondeur de communication sans fil peut être un transpondeur RFID utilisant une technologie NFC, une technologie RFID ou une autre technologie de communication sans fil.

Enfin, la mise en oeuvre pratique des modes de réalisation et variantes décrits est à la portée de la personne du métier à partir des indications fonctionnelles données ci-dessus.

## Revendications

1. Dispositif de communication sans fil (220) adapté à recevoir de l'énergie sans fil d'un autre dispositif de communication sans fil (110), le dispositif de communication sans fil comprenant :
- un bloc de charge (223) adapté à charger un dispositif de stockage d'énergie (224) ;
- un circuit de communication (222 ; 222') adapté à communiquer une information de chargement du dispositif de stockage d'énergie à l'autre dispositif de communication sans fil, et comprenant :
un transpondeur (322 ; 322') de communication sans fil ; et
un interrupteur (324 ; 324') relié à une première borne (TDO) du transpondeur, et commandé par le bloc de charge.

2. Dispositif selon la revendication 1, dans lequel l'interrupteur (324') est adapté à relier ou non la première borne (TDO) et un noeud (325') d'application d'une tension (V_{GPI}), ledit noeud étant inclus dans le circuit de communication (222'), en fonction d'une commande (S_{CH}) du bloc de charge, correspondant à l'information de chargement à communiquer.

3. Dispositif selon la revendication 1, dans lequel l'interrupteur (324) est adapté à relier ou non la première borne (TDO) et une deuxième borne (TD1) du transpondeur en fonction d'une commande (S_{CH}) du bloc de charge, correspondant à l'information de chargement à communiquer.

4. Dispositif selon la revendication 3, dans lequel le circuit de communication (222), par exemple le transpondeur (322), est adapté à détecter si les première et deuxième bornes (TDO, TD1) sont reliées ou en circuit ouvert, et à transmettre l'information de chargement correspondante à l'autre dispositif de communication sans fil (110).

5. Dispositif selon la revendication 3 ou 4, dans lequel l'interrupteur (324) est adapté à relier les première et deuxième bornes (TDO, TD1) lorsque le bloc de charge (223) commande la fermeture dudit interrupteur, et/ou à ouvrir le circuit entre les première et deuxième bornes (TDO, TD1) lorsque le bloc de charge (223) commande l'ouverture dudit interrupteur.

6. Dispositif selon l'une quelconque des revendications 3 à 5, dans lequel le bloc de charge (223) est adapté à relier, via l'interrupteur (324), les première et deuxième bornes (TDO, TD1) lorsque le dispositif de stockage d'énergie (224) passe d'un premier état de charge à un deuxième état de charge, et/ou à ouvrir, via l'interrupteur, le circuit entre les première et deuxième bornes (TDO, TD1) lorsque le dispositif de stockage d'énergie passe du deuxième état de charge au premier état de charge.

7. Dispositif selon l'une quelconque des revendications 3 à 6, dans lequel la commande du bloc de charge (223) est un signal de commande ayant :
- un premier état (S_{CH1}) indiquant un premier état de charge du dispositif de stockage d'énergie (224), le premier état étant destiné à déclencher, ou maintenir, l'ouverture du circuit entre les première et deuxième bornes (TDO, TD1) ; et
- un deuxième état (S_{CH2}) indiquant un deuxième état de charge du dispositif de stockage d'énergie, le deuxième état étant destiné à déclencher, ou maintenir, la fermeture du circuit entre les première et deuxième bornes (TDO, TD1).

8. Dispositif selon la revendication 6 ou 7, dans lequel le premier état de charge est un état de charge non terminée, et le deuxième état de charge est un état de charge terminée.

9. Dispositif selon l'une quelconque des revendications 3 à 8, dans lequel le transpondeur (322) comprend une unité de traitement (403) configurée pour détecter si les première et deuxième bornes (TDO, TD1) sont reliées ou en circuit ouvert.

10. Dispositif selon la revendication 9, dans lequel l'unité de traitement (403) comprend un circuit adapté à mesurer une tension présente à la première borne (TDO) et à délivrer une tension de référence dans la deuxième borne (TD1), l'unité de traitement (403) comprenant par exemple un moyen de comparaison configuré pour comparer la tension mesurée à la première borne (TDO) avec la tension de référence, de manière à détecter si les première et deuxième bornes (TDO, TD1) sont reliées ou en circuit ouvert.

11. Dispositif selon l'une quelconque des revendications 1 à 10, dans lequel l'information de chargement prend la forme d'une valeur binaire.

12. Dispositif selon l'une quelconque des revendications 1 à 11, dans lequel :
- le transpondeur (322) comprend une unité de stockage (404) adaptée à stocker l'information de chargement ; et/ou
- la première borne (TDO) est une borne d'entrée du transpondeur ; et/ou
- le dispositif de stockage d'énergie (224) est une batterie ; et/ou
- le dispositif de stockage d'énergie (224) est utilisé pour le dispositif de communication sans fil (220), et/ou pour charger un objet relié audit dispositif de communication sans fil, par exemple un objet connecté ; et/ou
- le transpondeur (322 ; 322') est sous la forme d'un circuit intégré ; et/ou
- le transpondeur est un transpondeur NFC ou un transpondeur RFID, par exemple un transpondeur RFID utilisant une technologie NFC.

13. Dispositif selon l'une quelconque des revendications 1 à 12, comprenant en outre une antenne de communication sans fil (221) reliée au transpondeur (322 ; 322') et adaptée à transmettre l'information de chargement par couplage électromagnétique avec une autre antenne de communication sans fil (113) de l'autre dispositif de communication sans fil (110), le bloc de charge (223) étant également relié à l'antenne de communication sans fil.

14. Procédé de communication d'une information de chargement d'un dispositif de stockage d'énergie (224) compris dans un dispositif de communication sans fil (220) adapté à recevoir de l'énergie sans fil d'un autre dispositif de communication sans fil (110), le dispositif de communication sans fil comprenant :
- un bloc de charge (223) adapté à charger le dispositif de stockage d'énergie ; et
- un circuit de communication (222 ; 222') comprenant :
un transpondeur (322 ; 322') de communication sans fil ; et
un interrupteur (324 ; 324') relié à une première borne (TDO) du transpondeur, et commandé par le bloc de charge ; l'interrupteur étant adapté à relier ou non la première borne (TDO) à une deuxième borne (TD1) du transpondeur (322), ou à un noeud (325') d'application d'une tension (V_{GPI}), ledit noeud étant inclus dans le circuit de communication (222'), en fonction d'une commande (S_{CH}) du bloc de charge, correspondant à l'information de chargement à communiquer ;
le procédé comprenant :
- la détection, par le circuit de communication, d'une liaison ou d'un circuit ouvert entre les première et deuxième bornes (TDO, TD1), ou entre la première borne (TDO) et le noeud (325') ; et
- la transmission, par le circuit de communication, de l'information de chargement correspondante à l'autre dispositif de communication sans fil (110).

15. Procédé selon la revendication 14, dans lequel la détection et/ou la transmission est réalisée par le transpondeur (322 ; 322').

16. Procédé selon la revendication 14 ou 15, comprenant en outre, avant la détection :
- l'envoi d'une commande (S_{CH}) du bloc de charge à l'interrupteur (324 ; 324'), correspondant à l'information de chargement, de manière à relier, ou ouvrir le circuit entre, les première et deuxième bornes (TDO, TD1) ou la première borne (TDO) et le noeud (325').
